# EUROPEAN PATENT APPLICATION

(11) **EP 3 922 146 A1**
(43) Date of publication of application: **15.12.2021**
(21) Application number: 20712067.6
(22) Date of filing: 06.02.2020
(51) Int. Cl.: A47J 31/00

(54) **BEVERAGE DISTRIBUTION SYSTEM WITH BEVERAGE RECIPIENT PLACEMENT AND BEVERAGE PREPARATION FLUID ARRANGEMENTS**

(30) Priority: 08.02.2019 PT 2019115301
(71) Applicant: Novadelta-Comércio e Industria de Cafés, Lda., 1950-041 Lisboa (PT)
(72) Inventor: NABEIRO, Rui Miguel, 7370-112 CAMPO MAIOR (PT); DE FIGUEIREDO BRANCO, João André, 1885-091 MOSCAVIDE (PT)
(74) Representative: Ferreira Pinto, Francisca
(86) International application number: PCT/PT2020/050006
(87) International publication number: WO 2020/162777

(57) **Abstract**

The present invention discloses a system of distribution of edible products, comprising a beverage preparation apparatus (1), in particular aromatic beverages such as coffee, tea and similar, that comprises a first recipient placement disposition (2) adapted for placement of a drinking recipient (10, 10') and a second recipient placement disposition (9) adapted for placing a beverage recipient (11, 11'), whereby said first and second recipient placement dispositions (2, 9) are provided at a similar level on said apparatus (1).

## Description

### Field of the invention

The present invention refers to the field of systems for preparing aromatic beverages by means of infusion or extraction of a respective substance, in particular systems with beverage discharge means to the interior of a drinking recipient along a direction opposite to the direction of the gravity force.

### Background of the invention

There are known machines in prior art that present recipients of fluids for preparing a beverage, for example water, for infusion of a respective beverage precursor substance. Said recipients can be provided as reservoirs that supply fluid to an infusion device, such as for example in the case of coffee machines by dripping, or be provided as recipients where the infusion of the beverage precursor substance takes place, such as for example in the case of teapots for preparing tea. Said machines present different placement dispositions of supply recipient of beverage preparation fluid.

Moreover, the prior art includes several beverage preparation machines with beverage discharge in a direction opposite the one of the gravity force, that is, through the base region of beverage recipients, such as for example cups. Said machines present recipient placement dispositions including beverage discharge device and adapted for an operative retention of the beverage recipient.

In particular in the case of aromatic beverages such as for example coffee or tea, the beverage discharge is a relevant process with potential impact upon the beverage quality obtained in the drinking recipient. In fact, the main characteristics of the discharge flow determine several aspects such as the eventual premature cooling of the beverage as a result of exposure thereof to air during the discharge to a cup, or other beverage drinking recipient.

The prior art includes several examples of the relative disposition of these two types of recipients, of the beverage preparation fluid and of the beverage, in a beverage preparation apparatus.

The document DE 2009 048233 A1 discloses a system of the type of the present invention whereby portions of edible substance are provided to a collection space and the beverage discharge unfolds along a direction opposite to the gravity force. In particular, the document discloses an apparatus that includes a placement disposition of preparation fluid recipient that in this case is provided as a capsule with a shape and dimension at least approximately similar to the capsule that contains the edible substance. Moreover, the discharge of the preparation fluid from a respective recipient is carried out at a level similar to the one of injection thereof into the capsule that contains the edible substance, but clearly below the level of beverage discharge into a drinking recipient.

The document WO 2014/086915 A1 discloses a similar system whereby there seems to be an opening for introducing a portion of edible substance and a beverage discharge provided at a similar height. However, the document does not disclose placement dispositions of preparation fluid and beverage recipients, at at least approximately similar levels on the apparatus.

The document WO 2015/084203 A1 filed by the author of the present application discloses a system for preparing aromatic beverages with particularly small configuration and dimensions, so that provides advantages in terms of portability of the apparatus.

The document WO 2017/200409 A1 also filed by the author of the present application discloses a system for preparing aromatic beverages with an optimized beverage discharge disposition and also presenting advantageous configurations of the apparatus.

Documents WO 2018/189071 A1 and CH 702946 A2 also disclose beverage preparation or distribution systems with beverage discharge along a direction contrary to the gravity force.

### General description of the invention

The objective of the present invention is to provide a system of distribution of edible products, in particular including a beverage preparation apparatus and fluid supply and beverage collection recipients that can be operatively placed on respective first and second recipient placement dispositions of said apparatus, said system being adapted so as to provide better conditions of fluid circulation between said first recipient of fluid supply and second recipient of collection of the resulting beverage, in particular including fluid and beverage passageway through the base region thereof, that is, along a direction opposite to the gravity force.

This objective is solved according to the present invention by means of a system for distribution of edible products according to claim 1.

In particular, the objective above is solved by means of a system that comprises an apparatus presenting an apparatus casing and an access disposition that provides selective access to said recipient placement disposition, in particular so that can selectively cover the recipient placement disposition and product discharge associated therewith, at least in case that said recipient is not placed on said recipient placement disposition.

An associated objective is to disclose a relative disposition of components and configuration of apparatus that minimizes the constructive height necessary to accommodate the fluid circulation between a fluid supply recipient and the beverage discharge to the beverage preparation recipient, in particular in a system whereby the beverage discharge is carried out in a direction contrary to the gravity force.

In particular, said drinking recipient is understood as the recipient used for final consumption of the beverage, such as for example of glass, cup or similar type. Said beverage preparation recipient is understood as a recipient configured for collecting a quantity of the fluid used in a mixture, for example of the infusion type, or added to another fluid so as to prepare a beverage, and generally corresponding to the quantity required for preparing a plurality of individual beverage portions for final consumption.

It is preferred when said apparatus is adapted for preparation of beverages by infusion, in particular of aromatic beverages such as tea or coffee, based upon the interaction between a beverage preparation fluid with a corresponding portion of beverage precursor substance inside of said beverage preparation recipient.

According to an embodiment, the infusion is provided on said fluid supply recipient, whereby the latter is in this case configured in similar manner to a teapot or coffee pot, and comprises or can be functionally associated with heating means of said apparatus.

According to another embodiment, the infusion is provided in an infusion space associated in flow connection downstream of said fluid supply recipient.

According to another embodiment, the infusion is provided inside of a collection device of an individual portion capsule, downstream of a flow pressurization device, and used for preparing a beverage such as for example coffee of espresso type.

It is preferred when the system according to the present invention further comprises portions of edible substance, for example tea or coffee, provided so that can be introduced on said beverage preparation recipient or in an infusion space associated in flow connection downstream of said fluid supply recipient.

It is preferred when said apparatus can present an access disposition provided in a generally lid-like shape, or similar, and adapted so that can selectively cover at least one of, preferentially both of, said first and second recipient placement dispositions.

It is further preferred when said top part of said apparatus only presents said first and second recipient placement disposition, being preferentially devoid of any other cavities of protuberances, and whereby the access disposition is provided in one piece or in a plurality of pieces, and configured so that can selectively, jointly and/or individually cover both of said recipient placement dispositions.

### Description of the figures

The invention shall be hereinafter described in greater detail based upon preferred embodiments and on the attached Figures.

The Figures show, in simplified schematic representations:
- Figure 1:: frontal and posterior views (on the right-hand side) of a first embodiment of a beverage preparation apparatus (1) of a system according to the present invention;
- Figure 2:: side views of the embodiment according to Figure 1;
- Figure 3:: views corresponding to those of Figure 1, with the access disposition (4) in an open condition;
- Figure 4:: views corresponding to those of Figure 1, with the access disposition (4) in an open condition;
- Figure 5:: front and top views (on the right-hand side) of a second embodiment of a beverage preparation apparatus (1) of a system according to the present invention, and with the access disposition (4) in a closed position;
- Figure 6:: side views of the embodiment according to Figure 5;
- Figure 7:: side view of the embodiment according to Figure 7, with the access disposition (4) removed and the drinking (9) and fluid recipients (11) placed;
- Figure 8:: top view according to Figure 7;
- Figure 9:: side view of a second embodiment according to Figure 7, with the access disposition (4) removed and the drinking (9) and fluid recipients (11) not placed;
- Figure 10:: top view according to Figure 9.

### Detailed description of preferred embodiments of the invention

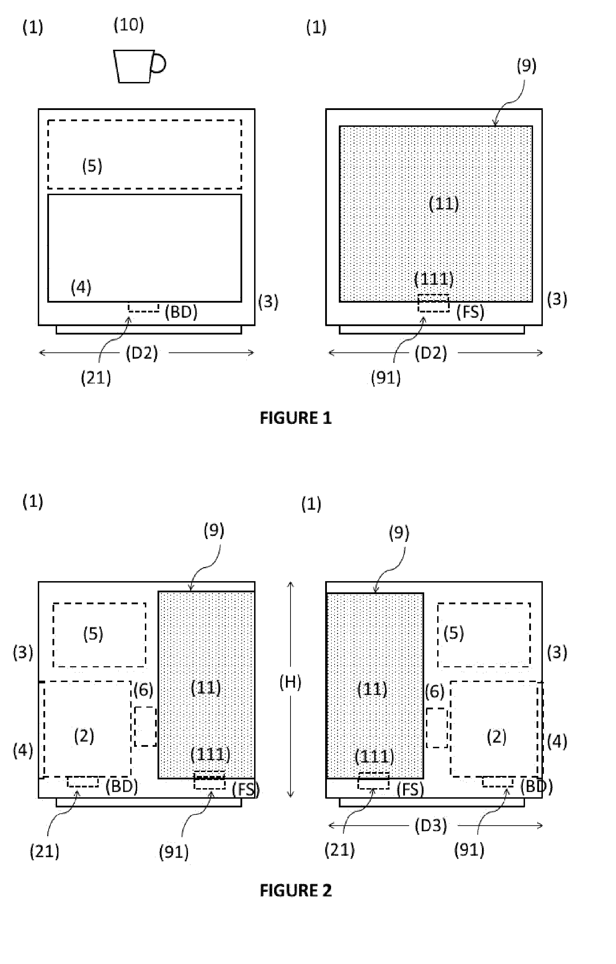

**Figures 1** to **4** represent a first embodiment of a beverage preparation apparatus (1) of a system according to the present invention.

Said system includes drinking recipients (10, 10'), for example glasses, cups or similar, adapted so that can be operatively placed on a first recipient placement disposition (2) of said apparatus (1). Said first recipient placement disposition (2) includes a beverage discharge element adapted so that can discharge a beverage flow (BD) through the base of the drinking recipient (10, 10') along a direction opposite to the gravity force. As represented, the drinking recipient (10) can be in the form of an espresso coffee cup, or similar.

Details of this type of beverage discharge disposition are known, notably from other publications by the applicant, such that one abdicates of a more detailed description thereof.

Said drinking recipient (10, 10') can present flow regulation means arranged on a base portion thereof and adapted so that only provide flow entry into said drinking recipient if the flow pressure is bigger than a previously defined flow pressure.

Said first recipient placement disposition (2) can present at least one of:
- a beverage discharge device (21) that includes at least one generally upwards oriented flow exit;
- a recipient placement surface (22) adapted for placement of at least one type of drinking recipient (10, 10'), preferentially at least two types of drinking recipients (10, 10') presenting at least one of different dimensions and different configurations;
- engagement means (23) associated with said recipient placement surface (22) and adapted so that can provide removable retention of said drinking recipient (10, 10') on said first recipient placement disposition (2).

Said apparatus (1) further presents a second recipient placement disposition (9) adapted so that provides the placement, particularly preferentially with removable retention, of at least one type of beverage preparation recipient (11, 11') that can be configured for at least one of: preparation of a beverage, and the storage of a beverage, said beverage being discharged downstream to a drinking recipient (10, 10').

In the case of the represented embodiment, said beverage fluid recipient (11, 11') is provided in the form of a water reservoir in flow connection so that supplies a fluid flow (FS) to an extraction device (5), whereby this extraction device is in flow connection with said first recipient placement disposition (2).

It is preferred when the retention of the beverage fluid recipient (11, 11') is adapted so that provides an indication to the user, for example of haptic type, or visual or acoustic signal, of retention position, and provides a flow circulation connection through the base, but liquid sealed in respect of the surrounding thereof.

According to an inventive aspect, said first and second recipient placement dispositions (2, 9), in particular at least the base region thereof, are advantageously provided at a level at least approximately similar of said apparatus (1).

Moreover, in the case of the represented embodiment, the first and second recipient placement dispositions (2, 9) are both provided at a level closer to the base region than to the top region of said apparatus (1). This relative disposition advantageously provides a smaller construction height of the apparatus for accommodating the several components of fluid circulation between the beverage preparation recipient (11) and the drinking recipient (10).

As represented, the apparatus (1) in this case presents an apparatus envelope (3) and an access disposition (4) that jointly define, at least substantially, the volume geometry of the apparatus (1), in particular a coherent geometry that in this case at least approximately corresponds to a cube.

Advantageously, said access disposition (4) provides selective access to said recipient placement disposition (2) and product discharge (21), so that prevents the possibility of accumulation of dusts and other residues as a result of exposure to environmental at a given location of use of the apparatus (1) .

It is particularly preferred, when the recipient placement disposition (2), and respective product discharge, is herewith selectively confined with respect to the exterior of the apparatus (1), so that the possibility of contamination thereof is mitigated.

Moreover, said apparatus envelope (3) and access disposition (4) jointly define a material volumetric that is preferentially substantially continuous, devoid of projections or cavities.

Moreover, said apparatus (1) can include a flow pressurization device (6) and a fluid heating device (not represented), so that can supply a flow (FS) at a temperature comprised between 60 and 100°C and at pressure comprised between 1 and 20 bar, so as to interact with said edible substance. The expert in the technique knows these means so that one abdicated of a more detailed representation or description thereof.

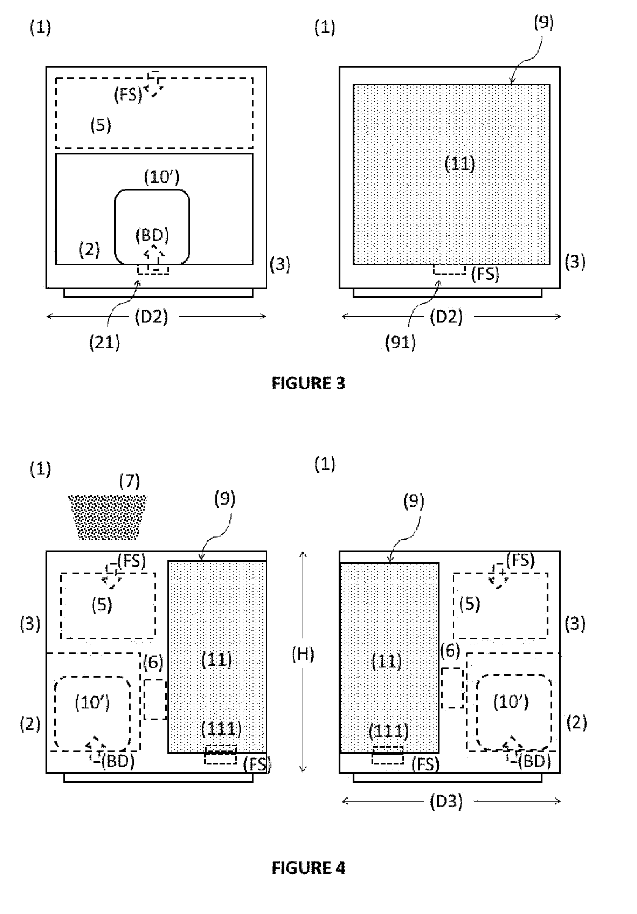

**Figures 3** and **4** represent the embodiment with the access disposition (4) in an open position, so that there is provided access to said first recipient placement disposition (2).

The extraction device (5) can be provided so that can collect a portion (7) of beverage precursor substance, for example a quantity of soluble coffee. As represented, the injection of beverage preparation fluid can be carried out in a direction similar to the gravity force.

After infusion of the beverage, the beverage discharge flow (BD) is conducted from an exit of said extraction device (5) to a recipient placement disposition (2) that includes a beverage discharge element disposed downstream thereof so that the beverage discharge to the interior of said drinking recipient (10, 10') unfolds through the base zone thereof.

As represented, the drinking recipient (10') can be of the mug type for collection of a quantity of coffee bigger than a conventional consumption dose, or similar.

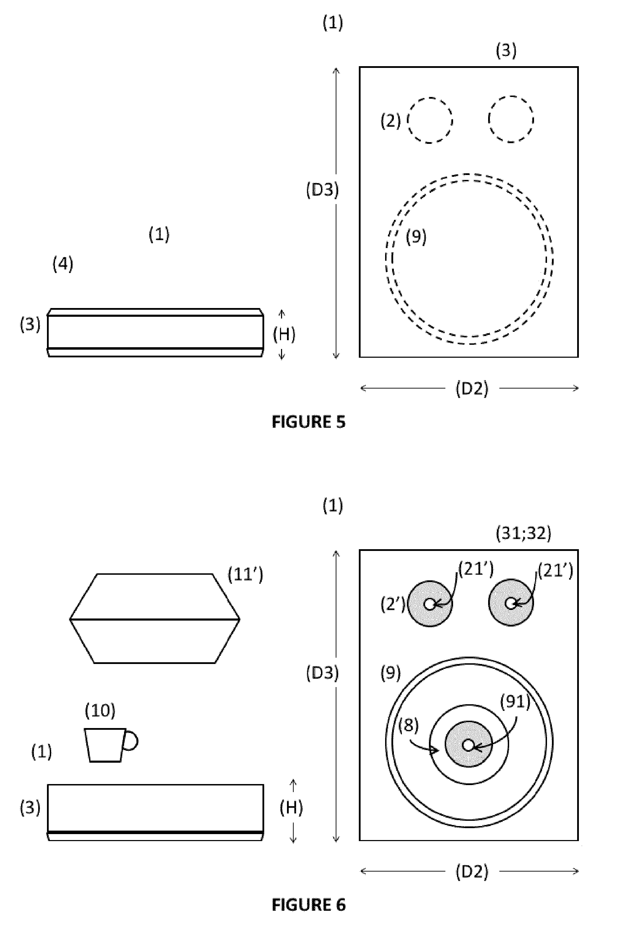

**Figures 5** to **8** represent a second embodiment according to the present invention, whereby the apparatus (1) according to the present invention presents an apparatus envelope (3) with a general shape of a tray board type.

According to an inventive aspect, both of said first and second recipient placement dispositions (2, 9) are provided at an at least approximately similar level on the top surface of said apparatus (1). Moreover, said first and second recipient placement dispositions (2, 9) are provided in pressurized flow connection, for example for example by means of a device of the hydraulic circulation pump type, preferentially at least the beverage discharge (BD) to the drinking recipient (10, 10') is done at a flow pressure that is bigger than the atmospheric pressure, for example of 1,2 bar, and smaller than 10 bar.

The apparatus (1) can further present at least one access disposition (4) adapted so that can be manually and/or mechanically actuated and thereby provide selective access at least to said first recipient placement disposition (2), preferentially also to said second recipient placement disposition (9), whereby said apparatus envelope (3) and access disposition (4) jointly provide at least most part of the material exterior envelope of said apparatus (1), and jointly configure at least approximately exterior volumetric shape of said apparatus (1) that preferentially corresponds to at least most part of a coherent geometry, or a set of at least part of coherent geometries.

Said apparatus envelope (3) and access disposition (4) can jointly define a materially continuous surface along at least most part of the extension of exterior surface at least of the top, frontal and posterior portions of said apparatus (1), preferentially also of the lateral portions thereof, with exception of interface regions, for example of slot type.

In case the access disposition (4) is in the closed position, said apparatus envelope (3) and access disposition (4) jointly define a volume devoid of protuberances and cavities associated with the discharge of edible product, and at least with no product discharge (21), preferentially also with no fluid discharge (91), exposed to the exterior of said apparatus (1), at least in top, frontal and posterior regions of said apparatus (1).

As represented in **Figures 5** and **6****,** the beverage preparation apparatus (1) can present two of said first recipient placement dispositions (2) that in each case include respective beverage discharge elements (21, 21') and are adapted for placement of at least one type of drinking recipient (10, 10'), as well as a second recipient placement disposition (9) that includes one injection and/or fluid discharge element (91) and is adapted for placement of at least one type of beverage fluid recipient (11, 11').

Said beverage fluid recipient (11, 11') can in this case be of the coffee pot type, or tea pot, presenting a base region adapted so that can be retained in removable manner on said second recipient placement disposition (9). In particular, the base region can present an element of single-way valve type, or similar, adapted so that only enables fluid injection and/or discharge when impinged with a flow pressure bigger than 1 bar, preferentially bigger than 1,2 bar, for example of 2 or 3 bar, or bigger.

The beverage distribution apparatus (1) can for this purpose comprise a flow pressurization device, of the pump type, adapted so that can generate an hydraulic pressure and/or subpressure in the flow circulation line between said first and second recipient placement dispositions (2, 9).

As further represented in Figure 5, the apparatus (1) can also present an access disposition (4) adapted so that provides coverture of said first and second recipient placement dispositions (2, 9), and thereby prevents an eventual accumulation of dust and other detritus on said recipient placement dispositions (2, 9). In particular, the access disposition (4) can be provided in the shape of a lid, extending at least over said first and second recipient placement dispositions (2, 9), and preferentially adapted so that can be retained in removable manner in the apparatus envelope (3), or actuated between an open and closed position, and vice-versa.

The portion (7) of edible substance used in the beverage preparation, for example a sachet of aromatic herbs, can be supplied to said beverage preparation recipient (11, 11') through an opening provided on top thereof.

As represented in Figure 5, and according to a particularly advantageous aspect of the present invention, the system comprises a beverage preparation apparatus (1) that is configured so that, in case the drinking and/or beverage preparation recipients (10, 11) are not placed on respective placement dispositions (2, 9), is devoid of cavities and projections, at least in the top surface thereof, preferentially also in the front, posterior and lateral surfaces.

Moreover, according to another particularly advantageous aspect of the present invention, the system comprises an apparatus (1) that is configures so that the height (H) thereof is much smaller, preferentially at least four times smaller than any of its other characteristic dimensions (D2, D3), particularly preferentially at least ten times smaller than the biggest of the other two characteristic dimensions (D2, D3).

It is preferred when said height (H) corresponds to the single height that at which extends the top surface of said apparatus (1), whereby this top surface can be provided by at least one of said apparatus envelope (3) and said access disposition (4).

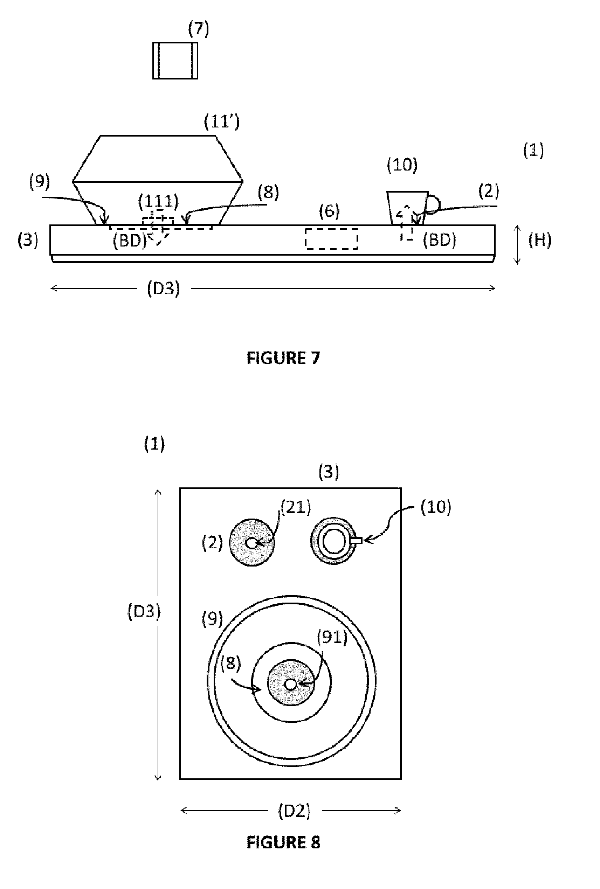

As represented in **Figure 8****,** it is preferred when said base surface associated with said second recipient placement disposition (9) presents a heating device (8), configured so that can supply a heating power through the base of the beverage fluid recipient (11, 11'). Naturally, the base of said beverage fluid recipient (11, 11') is adapted in corresponding manner, so as to promote the heat transfer to the fluid inside.

It is preferred when said access disposition (4) does not present any cavity, projection or opening.

It is preferred when said access disposition (4) is provided with at least one of: total dimension and dimension of actuation space that corresponds to at least half, preferentially more than half, particularly preferred at least approximately the width of at least one of: the top region and the frontal region of said apparatus envelope (3).

Said access disposition (4) can present a first and a second actionable parts (41, 42) configured so that can be moved with relation to the apparatus envelope (3), whereby the actuation of at least one of said first and second actionable parts (41, 42) can be carried out in at least one of: jointly with, and in autonomous manner relative to the other actionable part.

As represented in **Figure 8****,** it is preferred when the base surface associated with said second recipient placement disposition (9) presents a heating device (8), configured so that can provide a heating power through the base of the beverage fluid recipient (11, 11'). Naturally, the base of said beverage fluid recipient (11, 11') is adapted in corresponding manner, so as to promote the heat transfer to the fluid inside.

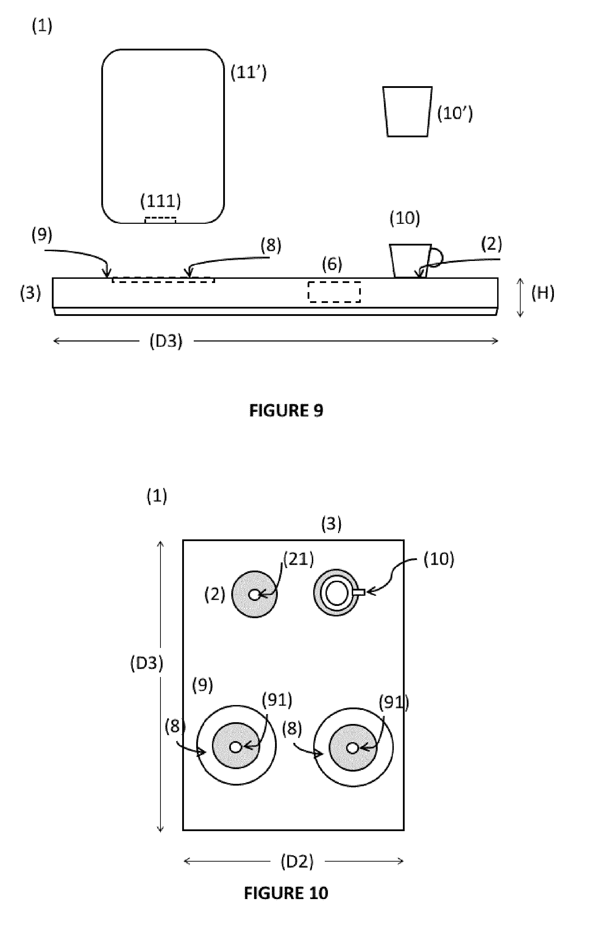

**Figures 9** and **10** represent another embodiment of similar configuration to the previous embodiment, and that presents a plurality, in this case two, of units of both of said first and second recipient placement dispositions (2, 9).

The beverage fluid recipients (11') can in this case be configured so that can collect beverage preparation fluids, for example milk, or of a previously prepared beverage, for example soluble coffee, so that can selectively supply a respective flow to at least one of two drinking recipients (10, 10') for final consumption by a user, provided in respective units of said first recipient placement disposition (2).

It is particularly preferred when each one of the units of said first recipient placement disposition (2) is provided in flow connection only with one respective second recipient placement disposition (9), in particular with a fluid discharge element (91) thereof.

It is herewith provided the possibility of preparing a beverage including milk using only a dedicated flow connection for such purpose, minimizing the risk of crossed contamination of substantially different flavours. A user can therefore place a drinking recipient (10) on a first beverage discharge (21) to obtain for example coffee, and afterwards on a second beverage discharge (21) to obtain milk.

An alternative example would be that of two different juices, two different beers or even two different waters, for example one natural and the other sparkling.

## Claims

1. System for preparing beverages including:
- at least one type of drinking recipient (10, 10');
- at least one type of beverage fluid recipient (11, 11') for at least one of: collection of a fluid to be used in the beverage preparation, and storage of beverage;
- a beverage distribution apparatus (1) that presents:
- at least a first recipient placement disposition (2) adapted so that provides operative placement of said drinking recipients (10, 10'), and presenting a beverage discharge (21) provided so that said beverage can be discharged to said drinking recipient (10, 10') along a direction opposite to the direction of the gravity force,
- at least a second recipient placement disposition (9) adapted so that provides operative placement of said beverage fluid recipients (11, 11'),
Said second recipient placement disposition (9) being provided in fluid connection upstream of recipient placement disposition (2),
- an apparatus envelope (3),
**characterized**
**in that** said first and second recipient placement dispositions (2, 9), in particular at least the respective base region thereof, are provided at an at least similar level on said apparatus (1).

2. System according to claim 1, **characterized in that** said first and second recipient placement dispositions (2, 9) are disposed so that the fluid discharge from said beverage fluid recipient (11, 11') is provided in at least one of:
- at a level at least approximately similar to the level of beverage discharge into said drinking recipient (10, 10');
- at a level closer to the top region of said apparatus (1) than the level of beverage discharge to the drinking recipient (10, 10').

3. System according to claims 1 or 2, **characterized in that** said second recipient placement disposition (9) is provided so that supplies a fluid flow along at least one of:
- a direction similar to the direction of the gravity force, e
- a direction opposite to the direction of the gravity force, and
**in that** said second recipient placement disposition (9) presents a fluid discharge (91) preferentially provided in the base region thereof and so that provides fluid connection with the base region of said beverage fluid recipient (11, 11').

4. System according to any one of claims 1 to 3, **characterized**
**in that** said first and second recipient placement dispositions (2, 9) are both provided in the top region of said apparatus (1).

5. System according to any one of claims 1 to 3, **characterized**
**in that** said first and second recipient placement dispositions (2, 9) are both provided at a level closer to the base region than to the top region of said apparatus (1).

6. System according to any one of claims 1 to 5, **characterized**
**in that** said first recipient placement disposition (2) is adapted so that provides removable retention of said drinking recipient (10, 10') in operative manner with relation to said beverage discharge (21), and
**in that** said second recipient placement disposition (9) is adapted so that provides removable retention of said beverage fluid recipient (11, 11') on the apparatus (1), preferentially by means of engagement of the mechanical type of a portion of the base region thereof and so that a fluid passageway (111) is aligned with said fluid discharge (91).

7. System according to any one of claims 1 to 6, **characterized**
**in that** said first and second recipient placement dispositions (2, 9) are both adapted so that provide a removable retention of the drinking recipient (10, 10') and beverage fluid recipient (11, 11'), respectively.

8. System according to any one of claims 1 to 7, **characterized**
**in that** said beverage fluid recipient (11, 11') provides a collection volume corresponding to one of:
- at least two times bigger, preferentially at least four time bigger than the liquid collection volume provided by said drinking recipient (10, 10');
- smaller than two times, or similar to, the liquid collection volume provided by said drinking recipient (10, 10').

9. System according to any one of claims 1 to 8, **characterized**
**in that** said apparatus (1) presents a second recipient placement disposition (9) provided in flow connection upstream of a plurality of first recipient placement dispositions (2).

10. System according to any one of claims 1 to 8, **characterized**
**in that** said apparatus (1) presents a plurality of second recipient placement dispositions (9) provided in flow connection upstream of at least a first recipient placement disposition (2).

11. System according to any one of claims 1 to 10, **characterized**
**in that** said apparatus (1), in particular the apparatus envelope (3), presents at least one of:
- a top region extending in continuous manner along a single plane and with an area bigger than the total area of the lateral regions of said apparatus envelope (3);
- said apparatus envelope (3) presents a top region and a base region with a similar shape when seen in top view, including in in shape of square, rectangle, circle, whereby the dimension of at least one of said top and base regions is smaller than the other dimension.

12. System according to any one of claims 1 to 11, **characterized**
**in that** said apparatus (1) comprises a fluid circulation device (6), for example a hydraulic pump, downstream from the flow discharge of said second recipient placement disposition (9), said fluid circulation device (6) being adapted so that provides a flow pressure of at most 4 bar, said fluid circulation device (6) being provided upstream and in fluid connection with said first recipient placement disposition (2).

13. System according to any one of claims 1 to 12, **characterized**
**in that** said apparatus (1) comprises a heating device (8) associated with said second recipient placement disposition (9), and preferentially configured as contact surface with the base region of said beverage fluid recipient (11, 11'), said heating device (8) being adapted so that can heat up the volume of fluid of said beverage fluid recipient (11, 11') up to a fluid temperature of at least 40°C, preferentially of at least 60°C, and at most 100°C.

14. System according to any one of claims 1 to 13, **characterized**
**in that** said system includes portions (7) of edible substance adapted so that can be introduced in said beverage fluid recipient (11, 11'), such as for example tea bags.

15. System according to any one of claims 1 to 14, **characterized**
**in that** said apparatus envelope (3) presents a height that is at most 50%, preferentially is at most 30%, particularly preferentially at most 15%, of a second characteristic dimension (D2) thereof, preferentially also of a third characteristic dimension (D3) thereof.

16. System according to any one of claims 1 to 15, **characterized**
**in that** said apparatus envelope (3) presents a height that is similar to at least one second characteristic dimension (D2) thereof, preferentially is also similar to a third characteristic dimension (D3) thereof.
